# EUROPÄISCHE PATENTSCHRIFT

(11) **EP 3 528 027 B1**
(45) Veröffentlichungstag und Bekanntmachung des Hinweises auf die Patenterteilung: **02.07.2025**
(21) Anmeldenummer: 19156457.4
(22) Anmeldetag: 11.02.2019
(51) Int. Cl.: G02B 17/02, G02B 5/12, G02B 5/136

(54) **OPTISCHE BAUGRUPPE ZUR RICHTUNGSÄNDERUNG VON LICHTSTRAHLEN MIT MINDESTENS ZWEI SPIEGELTEILEN**
OPTICAL ASSEMBLY FOR CHANGING THE DIRECTION OF LIGHT BEAMS WITH AT LEAST TWO MIRROR SECTIONS
MODULE OPTIQUE PERMETTANT DE CHANGER L'ORIENTATION DES FAISCEAUX LUMINEUX POURVU D'AU MOINS DEUX PARTIES MIROIRS

(30) Priorität: 13.02.2018 DE 102018103164
(43) Veröffentlichungstag der Anmeldung: 21.08.2019
(73) Patentinhaber: Ernst-Abbe-Hochschule Jena, 07745 Jena (DE)
(72) Erfinder: BLIEDTNER, Jens, 07745 Jena (DE); BARZ, Andrea, 07745 Jena (DE); GRÄFE, Günter, 07774 Camburg (DE); GRÄFE, Dietmar, 07774 Camburg (DE); HENKEL, Sebastian, 99425 Weimar (DE)
(74) Vertreter: Gleim Petri Patent- und Rechtsanwaltspartnerschaft mbB

(56) Entgegenhaltungen:
- DE-A1- 4 432 086
- US-A- 3 977 765
- US-A- 4 367 922
- US-A1- 2011 310 483

## Beschreibung

Die Erfindung betrifft eine optische Baugruppe mit zwei oder mehreren planen Spiegelteilen, von denen jeweils zwei in einem vorgegebenen Winkel zueinander während oder nach der Montage einjustiert werden können. Eine gattungsgemäße Baugruppe ist aus der DE 464 561 C bekannt.

Um einen Lichtstrahl innerhalb eines optischen Systems unmittelbar nacheinander zweimal statisch zu reflektieren, werden in der Regel, insbesondere, wenn eine sehr genaue Winkellage der beiden reflektierenden Flächen zueinander wesentlich ist, Reflexionsprismen verwendet. Ein Beispiel hierfür ist ein Dachkantprisma, das der Bildumkehr dient und bei dem die Abbildung gleichzeitig über beide Dachflächen erfolgt, wobei die beiden Dachflächen exakt einen Winkel von 90° miteinander einschließen müssen, damit kein Doppelbild entsteht.

Die optische Wirkung von Prismen wird durch deren Begrenzungsflächen und die Relativlage der von den Begrenzungsflächen optisch wirksamen Flächen bestimmt. Optisch wirksame Flächen sind Eintritts- und Austrittsflächen sowie Reflexionsflächen. Reflexionsprismen, an denen keine Dispersion erwünscht ist, sind so konzipiert, dass ein Strahlenbündel senkrecht auf eine Eintrittsfläche und eine Austrittsfläche auftrifft und somit zumindest für den Achsstrahl des Strahlenbündels keine optische Wirkung hat. Zwischen der Eintrittsfläche und der Austrittsfläche wird das Strahlenbündel an zwei oder mehr Reflexionsflächen reflektiert. Trifft das Strahlenbündel nicht unter einem Winkel der Totalreflexion auf eine der Reflexionsflächen, kann diese von außen verspiegelt werden, um das Strahlbündel vollständig oder auch nur teilweise zu reflektieren. Die Reflexionsschichten können folglich auch als Strahlteilerschichten genutzt werden. Ein Prisma hat grundsätzlich den Vorteil, dass die Winkellage der Reflexionsschichten, die bei der Herstellung des Prismas eingestellt wurde, dauerhaft erhalten bleibt und das Reflexionsprisma einen nur geringen Platzbedarf hat.

Nachteilig sind an Reflexionsprismen die aufwendige Herstellung, an den Ein- und Austrittsflächen entstehende Abbildungsfehler, das vergleichsweise hohe Gewicht und der lange Glasweg, der einer hohen Transmission entgegensteht. Darüber hinaus muss die Brechzahl des Glases sehr homogen sein und ein entsprechender Glaswerkstoff für den entsprechenden Wellenlängenbereich ausgewählt werden.

Es gab daher immer wieder Versuche, für eine Richtungsänderung von Lichtstrahlen durch zusammengesetzte Spiegelteile gebildete Baugruppen zu verwenden.

Die DE 1 101 010 B beschreibt einen aus drei Spiegelteilen zusammengesetzten Zentralspiegel. Die Winkellage der drei Spiegelteile zueinander hängt vom präzisen Schliff der seitlichen Anlageflächen der Spiegelteile ab. Es ist also erforderlich, an jedem Spiegelteil im Winkel eng tolerierte Seitenflächen herzustellen, um einen einigermaßen eng tolerierten Zentralspiegel zu erhalten. Nachteilig sind hier der hohe Fertigungs- und Prüfaufwand, das hohe Ausschussrisiko und eine nicht zu vermeidende Winkeltoleranz.

Aus der DE 30 19 629 C2 ist ein eng tolerierbarer Dachspiegel offenbart, der die Funktion eines Dachkantprismas erfüllt. Der Dachspiegel ist aus zwei Spiegelteilen gebildet, die mit Hilfe einer eng tolerierten Winkellehre in eine eng tolerierte Winkelposition zueinander gebracht werden und in dieser Position durch Kittung miteinander verbunden sind. Der Verlauf der Kittfläche rechtwinklig zur Dachkante schließt Änderungen des Dachkantwinkels durch Schrumpfung der Kittmasse aus. Der Dachspiegel behält demnach seine durch die Winkellehre gegebene Winkellage konstant bei. Nachteilig ist hier, dass Toleranzen der Spiegelteile unbeachtet bleiben, wodurch der Winkel, den die Spiegelteile nach der Montage miteinander einschließen, mit einer großen Toleranz behaftet ist.

Aus der vorgenannten DE 464 561 C ist ein bildumkehrendes Suchersystem mit drei definiert zueinander angeordneten Spiegelteilen bekannt, die die Funktion eines Pentaprismas erfüllen. Die beiden jeweils eine Dachfläche bildenden Spiegelteile sind in einem Gehäuseteil senkrecht zueinander ausgerichtet und, eine Dachkante miteinander bildend, gehalten. Eines dieser beiden Spiegelteile ist nahe der Dachkante über ein elastisches Mittel in dem Gehäuseteil gehalten und liegt an einem zur Dachkante entfernten Ende auf einer Justierplatte auf, die über eine Schraube gehoben und gesenkt werden kann. Damit kann dieses Spiegelteil um einen Drehpunkt im elastischen Material gekippt werden, womit der Winkel, den die beiden Spiegelteile miteinander einschließen, justiert werden kann. Die einjustierte Lage wird durch Verlackung an diversen Sicherungsstellen gesichert.

Gegenüber der Verwendung eines Pentaprismas hat diese Anordnung den Vorteil, leichter zu sein und dass die Fehler, die durch ein transmissives umlenkendes System im Vergleich zu einem reflektiven umlenkenden System entstehen, vermieden werden.

Nachteilig sind der vergleichsweise hohe Fertigungs- und Montageaufwand und die nicht garantierte Langzeitstabilität der Justierlage.

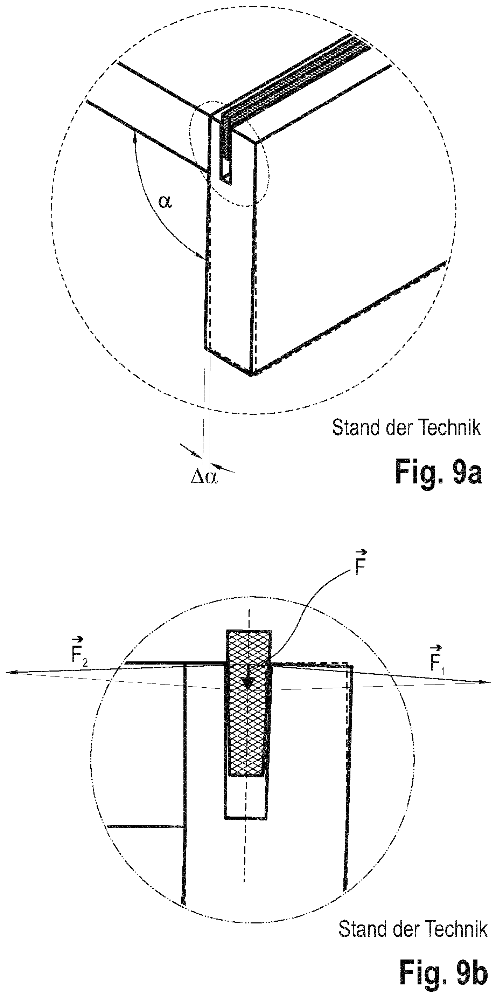

In der DE 44 32 086 A1 ist eine Optikbaugruppe, insbesondere ein Retroreflektor mit einer Justierung beschrieben. Sie besteht aus mindestens zwei Spiegelteilen (dort flächenhafte Einzelteile), wobei eine Seitenfläche des ersten Spiegelteils mit einer Spiegelfläche (dort Reaktionsfläche) des zweiten Spiegelteils in einer bestimmten Relativlage zueinander durch Kitt verbunden ist. Damit bilden die beiden Spiegelflächen der beiden Spiegelteile miteinander eine Kante und schließen einen vorgegebenen Winkel miteinander ein, dessen Scheitelpunkt auf der Kante liegt. Um diesen Winkel einjustieren zu können, wird vorgeschlagen, dass in eine freie Seitenfläche (die Seitenfläche des ersten Spiegelteils, die in Verlängerung der Rückfläche des zweiten Spiegelteils an diese angrenzt) ein Justierspalt, offensichtlich senkrecht zur Seitenfläche verlaufend, eingearbeitet ist und dessen Tiefe in etwa der Dicke des zweiten Spiegelteils entspricht. In den Justierspalt ist, abhängig von einem gewünschten Justagezustand des Winkels, ein Keil entsprechend tief eingedrückt und kraftschlüssig fixiert. Die Tiefe des Justierspaltes gleich der Dicke des angekitteten zweiten Spiegelteils ist eine zwingende Voraussetzung, um durch ein Auseinanderspreizen des Justierspaltes mit dem Eindrücken des Keils die Spiegelfläche des ersten Spiegelteils zu der des zweiten Spiegelteils hin zu kippen und damit den Winkel zu verringern. Die weiteren genannten Werte für die Parameter des Justierspalts und des Keils, wie die Justierspaltbreite, welche in etwa einem Viertel der Dicke des ersten Spiegelteils entspricht, oder der Keilwinkel, von etwa 10', sind eher von vorteilhafter Natur, obwohl sie in der Beschreibung als alternativlos angegeben sind und im höchstgeordneten Patentanspruch, der eine justierbare Baugruppe beansprucht, angegeben sind. Eine Baugruppe gemäß dem Stand der Technik ist in **Fig. 9a** gezeigt.

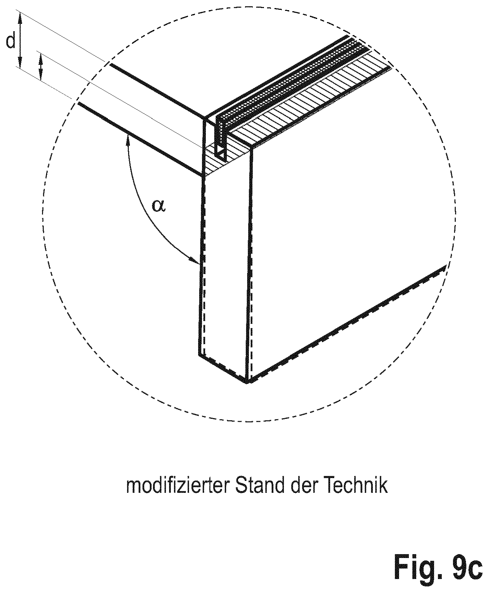

Die zwingende Notwendigkeit der Tiefe des Justierspaltes gleich der Dicke des ersten Spiegelteils wird anhand der **Fig. 9c** erläutert. Wäre die Tiefe des Justierspaltes kleiner als die Dicke des ersten Spiegelteils, würde ein Teil des Fügebereiches zwischen den beiden Spiegelteilen (schraffiert dargestellt), der durch die Differenz der Tiefe und der Dicke bestimmt ist, als ein Widerlager gegen eine Verformung und damit Verkippung der Spiegelfläche wirken. Hingegen wird das erste Spiegelteil, wenn die Tiefe der Dicke entspricht, so verformt, dass die Rückseite und folglich die Spiegelfläche des ersten Spiegelteils um einen Pseudodrehpunkt in der Kante gekippt wird. In **Fig. 9b** sind die Wirkungsrichtungen der Teilkräfte dargestellt, wie sie auf die Wandflächen des Justierspaltes wirken, der im spannungsfreien Zustand einen rechteckförmigen Querschnitt hat. Während die auf das erste Spiegelteil eingetragene Teilkraft weitestgehend senkrecht auf dessen Rückseite gerichtet ist, ist die auf das zweite Spiegelteil eingetragene Teilkraft weitestgehend parallel zur Rückseite gerichtet. Es entstehen entsprechend in den Spiegelteilen in unterschiedliche Richtungen wirkende Spannungen und die Justage des Winkels wird allein durch die Verformung nur eines der Spiegelteile realisiert.

Es ist die Aufgabe der Erfindung, eine optische Baugruppe mit mindestens zwei Spiegelteilen zu schaffen, die langzeitstabil einen eng tolerierten Winkel miteinander einschließen,bei denen die Spiegelteile entweder spannungsfrei sind oder wenigstens annähernd gleich unter Spannung stehen.

Die Aufgabe wird für eine optische Baugruppe mit den Merkmalen des Anspruches 1 gelöst. Vorteilhafte Ausführungen sind in den rückbezogenen Unteransprüchen angegeben.

Die Erfindung soll nachfolgend anhand von Ausführungsbeispielen unter Zuhilfenahme von Zeichnungen näher erläutert werden. Hierzu zeigen:
- Fig. 1a: eine perspektivische Darstellung einer ersten Grundvariante einer optischen Baugruppe mit zwei Spiegelteilen mit einem Spaltkörper in einem Justierspalt zwischen einer Fügefläche am zweiten Spiegelteil und einer Spiegelfläche des zweiten Spiegelteils,
- Fig. 1b: eine Seitenansicht der ersten Grundvariante gemäß Fig. 1a,
- Fig. 2a: eine perspektivische Darstellung einer zweiten Grundvariante einer optischen Baugruppe mit einem Keil als Spaltkörper in einem Justierspalt in Form einer Nut im zweiten Spiegelteil,
- Fig. 2b: eine Seitenansicht der zweiten Grundvariante gemäß Fig. 2a,
- Fig. 2c: eine Darstellung des Kräfteeintrages in die zweite Grundvariante, wobei die Wirkungslinie eine Winkelhalbierende des ersten Winkels darstellt,
- Fig. 3a: eine perspektivische Darstellung der zweiten Grundvariante einer optischen Baugruppe mit einem Zylinderstab als Spaltkörper in einem Justierspalt in Form einer Nut im zweiten Spiegelteil,
- Fig. 3b: eine Seitenansicht der zweiten Grundvariante gemäß Fig. 3a,
- Fig. 4a: ein erstes Ausführungsbeispiel einer optischen Baugruppe für beide Grundvarianten, mit teilverspiegelten Spiegelflächen,
- Fig. 4b: ein zweites Ausführungsbeispiel einer optischen Baugruppe für beide Grundvarianten, mit spezieller Beschichtung,
- Fig. 4c: ein drittes Ausführungsbeispiel einer optischen Baugruppe für beide Grundvarianten mit sphärisch gekrümmten Spiegel- und Rückflächen,
- Fig. 4d: ein viertes Ausführungsbeispiel einer optischen Baugruppe für beide Grundvarianten, mit einer Freiform- oder asphärisch gekrümmten Rückfläche,
- Fig. 5: ein fünftes Ausführungsbeispiel, welches alternativ eine Modifikation des ersten bis vierten Ausführungsbeispiels ist, mit drei Spiegelteilen, die paarweise einen Winkel α von 90° miteinander einschließen,
- Fig. 6: ein sechstes Ausführungsbeispiel, welches alternativ eine Modifikation des ersten bis vierten Ausführungsbeispiels ist, mit drei Spiegelteilen, die paarweise einen Winkel α von 120° miteinander einschließen,
- Fig. 7: ein siebentes Ausführungsbeispiel, welches alternativ eine Modifikation des ersten bis vierten Ausführungsbeispiels ist, mit zwei Spiegelteilen, die jeweils eine dreieckige Spiegelfläche aufweisen,
- Fig. 8: ein achtes Ausführungsbeispiel, welches alternativ eine Modifikation des ersten bis vierten Ausführungsbeispiels ist, mit zwei Spiegelteilen, die jeweils eine halbellipsenförmige Spiegelfläche aufweisen und
- Fig.9a-9c: Darstellungen zur Erläuterung des Standes der Technik.

Die Erfindung betrifft eine optische Baugruppe, die in allen Ausführungen zur Richtungsänderung von darauf gerichteten Lichtstrahlen führt. Darüber hinaus kann sie das Licht vorteilhaft gleichzeitig anderweitig beeinflussen, was anhand von Ausführungsbeispielen erläutert wird.

Die optische Baugruppe besteht mindestens aus zwei Spiegelteilen 1, 2, kann aber je nach der Anzahl der gewünschten Richtungsänderungen für einen Lichtstrahl auch mehr Spiegelteile 1, 2 umfassen, von denen jeweils zwei miteinander ein Spiegelteilpaar 0 bilden.

Die Spiegelteile 1, 2 stellen jeweils einen Glaskörper mit einer Spiegelfläche 1.1, 2.1, einer hierzu parallelen Rückfläche 1.2, 2.2 und mindestens drei Seitenflächen dar. Jeweils zwei der Spiegelteile 1, 2 sind so zueinander angeordnet, dass deren Spiegelflächen 1.1, 2.1, einen vorgegebenen ersten Winkel α miteinander einschließend und eine Kante 3 mit einer Länge l bildend, aneinandergrenzen.

Umfasst die optische Baugruppe mehr als zwei Spiegelteile 1, 2, so können die durch jeweils zwei der Spiegelflächen 1.1, 2.1 gebildeten Spiegelflächenpaare einen unterschiedlichen Betrag für den ersten Winkel α und / oder die Länge l der jeweils gebildeten Kante 3 aufweisen. Pro Spiegelflächenpaar weist eines der beiden das Spiegelflächenpaar bildenden Spiegelteile 1, 2 eine plane Seitenfläche auf, die eine Fügefläche 1.3 darstellt. Die Umfangsform der Spiegelflächen 1.1, 2.1 ist, abgesehen von einer Beschränkung durch eine Fügefläche 1.3, beliebig an den Strahlquerschnitt eines Lichtstrahls anpassbar, für den die optische Baugruppe vorgesehen ist. Für einen üblicherweise runden Strahlquerschnitt wird man die Spiegelfläche 1.1, 2.1 rechteckig, insbesondere quadratisch ausführen.

Die optische Baugruppe enthält einen Justierspalt 6, in dem ein Spaltkörper 4 angeordnet ist, mit dem bei der Montage der optischen Baugruppe ein erster Winkel α, den die beiden Spiegelflächen 1.1, 2.1 jeweils eines Spiegelflächenpaares miteinander einschließen, mit einer hohen Genauigkeit bis in den Bereich von Winkelsekunden einjustiert wurde.

Es ist erfindungswesentlich, dass der Spaltkörper 4 in einer Tiefe t entlang einer Wirkungslinie 5, die die Kante 3 schneidet, in die optische Baugruppe ragt.

Die Wirkungslinie 5 weist die Richtung (Spaltrichtung) auf, in der der Spaltkörper 4 in die optische Baugruppe, genauer in das Spiegelteilpaar 0, eingeführt wurde, und verläuft durch den Spaltkörper 4.

Der Justierspalt 6 kann entweder durch eine Spiegelfläche und eine Seitenfläche der an einem Spiegelteilpaar 0 beteiligten Spiegelteile 1, 2 oder durch eine Nut in einem der beiden Spiegelteile 1, 2 gebildet sein. Je tiefer der Spaltkörper 4 in Richtung der Wirkungslinie 5 in den Justierspalt 6 eingeführt ist, desto größer wird der Winkel, den die Wandflächen des Justierspaltes 6 miteinander einschließen. Diese Winkeländerung überträgt sich auf den ersten Winkel α. Es gibt grundsätzlich zwei Grundvarianten dafür, wo der Spaltkörper 4 in der optischen Baugruppe angeordnet sein kann.

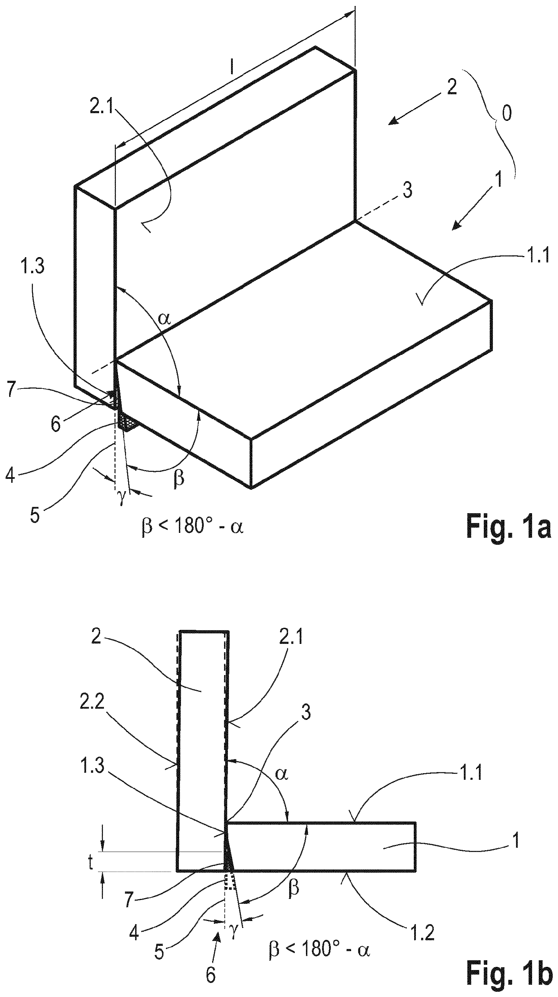

Eine erste Grundvariante für eine optische Baugruppe ist in den **Fig. 1a und 1b** anhand von zwei Spiegelteilen 1, 2 gezeigt. Eine Seitenfläche des ersten Spiegelteils 1 stellt eine Fügefläche 1.3 dar, die mit der Spiegelfläche 1.1 des ersten Spiegelteils 1 einen zweiten Winkel β einschließt, der kleiner 180° minus dem ersten Winkel α ist. Die Fügefläche 1.3 und die Spiegelfläche 2.1 des zweiten der Spiegelteile 2 schließen einen dritten Winkel γ miteinander ein und bilden einen Justierspalt 6, in dem der Spaltkörper 4 sitzt und an dem die Fügefläche 1.3 und die Spiegelfläche 2.1 des zweiten Spiegelteils 2 anliegen. Der erste Winkel α beträgt hier beispielhaft 90°. Entsprechend ist der zweite Winkel β kleiner 90°, z. B. 88,5°, sodass sich für den dritten Winkel γ 1,5° ergibt. Um den ersten Winkel α exakt einzujustieren, wurden die Fügefläche 1.3 und die Spiegelfläche 2.1 des zweiten Spiegelteils 2 bei der Montage aneinandergelegt. Durch das zunehmende weitere Einschieben des Spaltkörpers 4, der hier vorteilhaft ein Keil ist, zwischen die Fügefläche 1.3 und die Spiegelfläche 2.1 bildete sich ein größer werdender keilförmiger Justierspalt 6 aus, bis der erste Winkel α einen vorgegebenen Betrag, hier beispielhaft 90°, erreicht hat. Nach abschließender stoffschlüssiger Fixierung des Keils, in dem der Justierspalt 6 mit Klebstoff 7 aufgefüllt wurde, wurde das noch aus dem Justierspalt 6 ragende Keilende, in den Zeichnungen als Punktlinie dargestellt, abgetrennt. Enthält die optische Baugruppe mehr als zwei Spiegelflächen 1.1, 2.1, so bilden jeweils zwei Spiegelflächen 1.1, 2.1 ein Spiegelpaar miteinander, die ebenso wie das beschriebene Spiegelpaar montiert wurden und zueinander angeordnet sind. Dabei können die genannten Winkel andere oder auch gleiche Beträge aufweisen, wie sie betreffend des ersten Spiegelpaares gegeben sind.

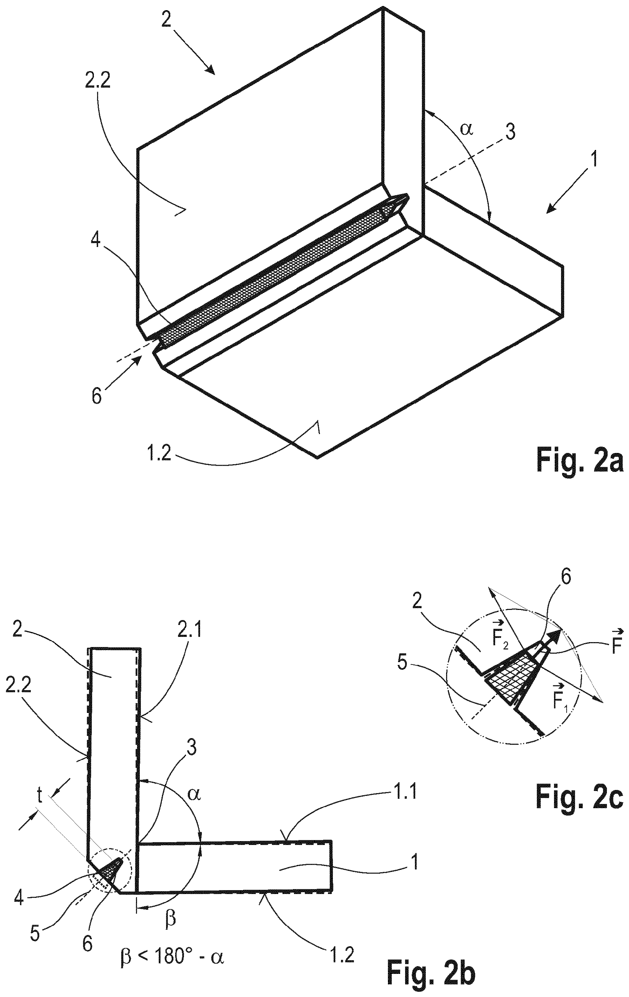

Eine zweite Grundvariante für eine Baugruppe ist in den **Fig. 2a** - **3b** ebenfalls beispielhaft anhand von zwei Spiegelteilen 1, 2 gezeigt.

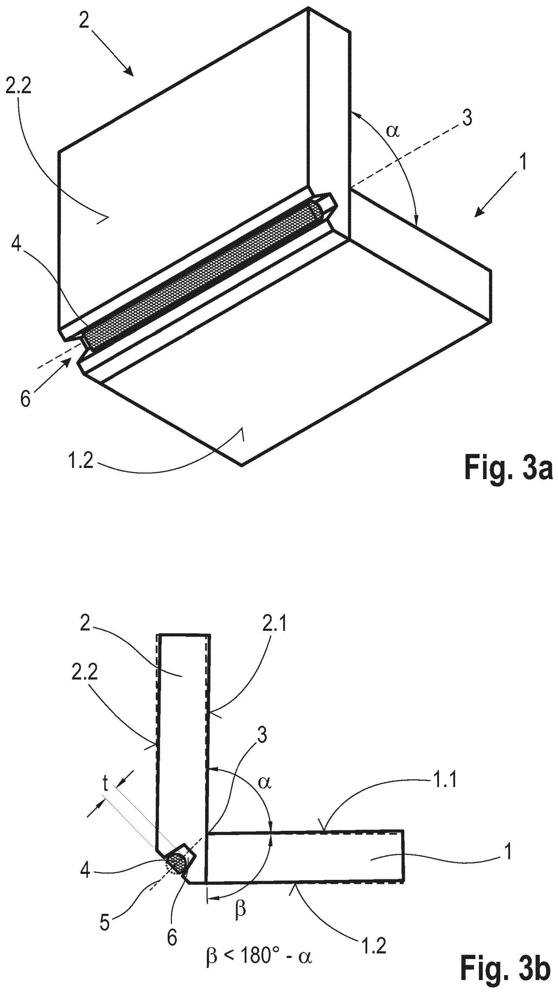

Auch hier stellt eine Seitenfläche des ersten Spiegelteils 1 eine Fügefläche 1.3 dar. Diese Fügefläche 1.3 und die Spiegelfläche 1.1 des ersten Spiegelteils 1 schließen einen zweiten Winkel β miteinander ein, der kleiner 180° minus dem ersten Winkel α ist. Die Fügefläche 1.3 und die Spiegelfläche 2.1 des zweiten der Spiegelteile 2 sind stoffschlüssig vorteilhaft durch Diffusionsschweißen miteinander verbunden, sodass die beiden Spiegelflächen 1.1, 2.1, bevor der Spaltkörper 4 in die optische Baugruppe eingebracht wurde (durch Strichlinien angedeutet), einen geringfügig größeren als den vorgegebenen ersten Winkel α miteinander eingeschlossen haben. In dem zweiten Spiegelteil 2 ist als Justierspalt 6 eine vorgefertigte Nut mit einem trapez- oder v-förmigen Querschnitt über die Länge l vorhanden, die parallel zur Kante 3 verläuft. In der Nut sitzt der Spaltkörper 4 kraftschlüssig. Mit dem zunehmend tieferen Einbringen des Spaltkörpers 4 wurden über die Nut Biegekräfte in das zweite Spiegelteil 2 eingebracht, die zu zunehmend größeren Kerbspannungen in der Nut zu einer Verbiegung des ersten und des zweiten Spiegelteils 1, 2 aufeinander zu führten. Als Spaltkörper 4 kommt hier ebenfalls ein Keil, gezeigt in den **Fig. 2a und 2b****,** bevorzugt jedoch ein Zylinderstab, gezeigt in den **Fig. 3a und 3b****,** zur Anwendung. Dabei erstreckt sich der Spaltkörper 4 wenigstens über die Hälfte, bevorzugt annähernd oder ganz über die Länge l der Kante 3. Der Spaltkörper 4 wurde so tief in die Nut eingebracht, bis durch die Verbiegung des ersten und des zweiten Spiegelteils 1, 2 die Spiegelfläche 2.1 des zweiten Spiegelteils 2 und die Spiegelfläche 1.1 des ersten Spiegelteils 1 in einen Winkelabstand des vorgegebenen ersten Winkels α zueinander positioniert waren. Vorteilhaft weist die Rückfläche 2.2 des zweiten Spiegelteils 2 eine zur Wirkungslinie 5 orthogonal verlaufende Fase auf, entlang derer der überschüssige Anteil des aus der Nut ragenden Spaltkörpers 4, in den Zeichnungen als Punktlinien dargestellt, nach vollendeter Montage und Justage abgetrennt wurde. Es ist besonders vorteilhaft, wenn die Wirkungslinie 5 eine Winkelhalbierende des ersten Winkels α darstellt. In **Fig. 2c** ist für diese Ausführung die Kräfteverteilung dargestellt. Die über den Keil oder auch einen anderen Spaltkörper 4, wie einen Zylinderstab, durch Eindrücken in die Nut entlang der Wirkungslinie 5 eingetragene Kraft wird in einem gleichen Betrag und bezogen auf die Rückflächen 1.2, 2.2 der beiden Spiegelteile 1, 2 in gleicher Richtung auf die Rückflächen 1.2, 2.2 gerichtet übertragen. Indem die beiden Spiegelteile 1, 2 durch Diffusionsschweißen miteinander verbunden wurden, wirken sie zusammen wie ein monolithisches Bauteil und der Krafteintrag führt zu einer gleichen Verspannung und damit Verformung der beiden Spiegelteile 1, 2. Der Spaltkörper 4 kann auch aus zwei oder mehreren Segmenten bestehen, die beispielsweise an den beiden Enden der Nut bzw. über die Nut verteilt eingebracht sind. Werden diese unterschiedlich tief in die Nut eingeführt, kann neben dem Winkelabstand auch ein Pyramidalfehler der optischen Baugruppe korrigiert werden.

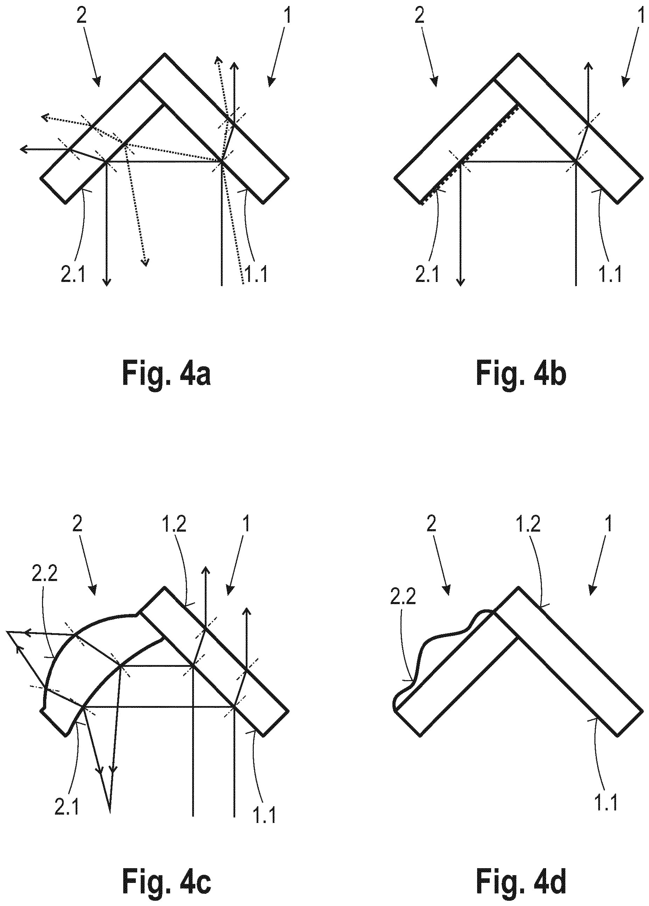

Auf Basis der alternativen Verwendung der beiden vorgenannten Grundvarianten lässt sich eine Vielzahl von optischen Baugruppen gleicher Funktionsweise realisieren. Sie sollen hauptsächlich Reflexionsprismen ersetzen können, aber auch so ausführbar sein, dass sie gleichzeitig den Lichtstrahl teilen und beeinflussen, wie z. B. formen oder polarisieren. Die in den **Fig. 4a - 4d****,** **5****,** **6****,** **7 und 8** in Skizzen dargestellten Ausführungen sind entsprechend der ersten oder der zweiten Grundvariante montierte optische Baugruppen. In einigen der Figuren ist der Verlauf des Hauptstrahls eines auf die optische Baugruppe gerichteten Lichtstrahls angegeben, um die Funktionsweise der jeweiligen Ausführung aufzuzeigen.

Das in **Fig. 4a** gezeigte erste Ausführungsbeispiel zeigt z. B. eine optische Baugruppe, bei der die beiden Spiegelflächen 1.1, 2.1 jeweils teilverspiegelt sind. Der erste Winkel α ist 90°. Ein Anteil eines unter einem Einfallswinkel auf die Spiegelfläche 1.1 des ersten Spiegelteils 1 gerichteten Lichtstrahls wird wie bei einem Halbwürfelprisma in Einfallsrichtung zurück reflektiert, während ein zweiter Anteil durch die Spiegelfläche 1.1 des ersten Spiegelteils 1 und ein dritter Anteil durch die Spiegelfläche 2.1 des zweiten Spiegelteils 2 transmittiert. Durch eine Änderung des Einfallswinkels kann der Winkel, den die beiden transmittierten Strahlanteile miteinander einschließen, verändert werden.

Bei dem in **Fig. 4b** gezeigten zweiten Ausführungsbeispiel ist die Spiegelfläche 1.1 des ersten Spiegelteils 1 mit einer Teilverspieglung versehen und die Spiegelfläche 2.1 des zweiten Spiegelteils 2 mit einer reflektierenden Phasen- oder Amplitudengitterschicht versehen. Neben einem aus dem ersten Spiegelteil 1 ausgekoppelten Teilstrahl wird ein am zweiten Spiegelteil 2 reflektierter Strahlanteil in ein Beugungsspektrum zerlegt.

Bei dem in **Fig. 4c** gezeigten dritten Ausführungsbeispiel sind die Spiegelfläche 2.1 und die Rückfläche 2.2 des zweiten Spiegelteils 2 zusätzlich zur Teilverspieglung der Spiegelfläche 2.1, Zylinderlinsenflächen darstellend, in einer Richtung sphärisch gekrümmt, wodurch sowohl ein durch das zweite Spiegelteil 2 reflektierter zweiter Strahlanteil als auch ein hindurch transmittierender dritter Strahlanteil jeweils in eine linienförmige Strahlverteilung fokussiert werden. Ein erster Strahlanteil wird durch die Teilverspieglung der Spiegelfläche 1.1 des ersten Spiegelteils 1 ausgekoppelt.

In einem nicht in den Zeichnungen dargestellten Ausführungsbeispiel sind die Zylinderlinsenflächen gemäß dem dritten Ausführungsbeispiel rotationssymmetrische sphärische Flächen, die die Strahlanteile eines einfallenden parallelen Lichtstrahles jeweils in einen Fokuspunkt fokussieren.

Bei dem in **Fig. 4d** gezeigten vierten Ausführungsbeispiel ist die Rückfläche 2.2 des zweiten Spiegelteils 2 als eine Freiform- oder sphärische Fläche ausgeführt.

Die vorgenannten vier Ausführungsbeispiele ließen sich durch eine unbegrenzte Anzahl von weiteren Ausführungsbeispielen ergänzen, mit unterschiedlicher Anzahl von Spiegelteilen, unterschiedlichen Formen von Spiegelteilen, unterschiedlichen ersten Winkeln α, unterschiedlichen funktionalen Beschichtungen und unterschiedlichen Oberflächenformen der Spiegel- und Rückflächen.

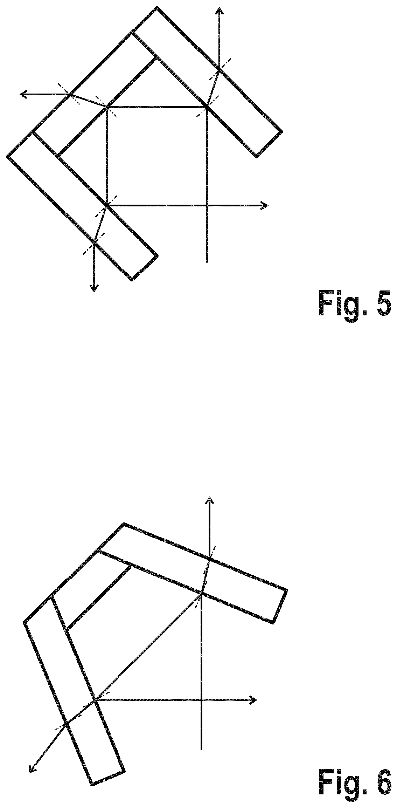

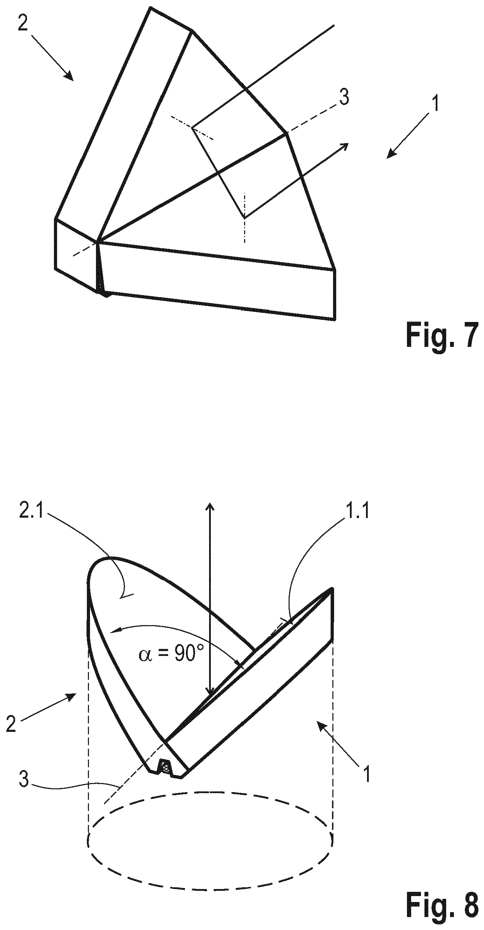

So zeigen z. B. die **Fig. 5** und **Fig. 6** jeweils eine Variante mit drei Spiegelflächen, hier in einer Anordnung, wie sie ein Pentaprisma ersetzen können, **Fig. 7** eine Variante mit zwei dreieckigen Spiegelflächen und **Fig. 8** eine Variante mit zwei halbellipsenförmigen Spiegelflächen. Die Variante mit den halbellipsenförmigen Spiegelflächen in Kombination mit einem ersten Winkel α von 90° und vollverspiegelten Spiegelflächen 1.1, 2.1 des ersten und zweiten Spiegelteils 1, 2 ist eine besonders vorteilhafte Ausführung zum Ersatz eines Dachkantprismas, mit minimalem Gewicht, da die beiden Spiegelflächen 1.1, 2.1 in eine Ebene projiziert einen Kreis ergeben, der an den Durchmesser des Lichtstrahls, der hier in sich selbst reflektiert wird, eingepasst sein kann.

Insbesondere bei der Verwendung der optischen Baugruppe in der Funktion eines Dachkantprismas ist es von Vorteil, wenn die Fügefläche 1.3 und die Spiegelfläche 2.1 des zweiten Spiegelteils 2 ohne Klebstoff, unmittelbar stoffschlüssig diffusionsverschweißt sind. Das Entstehen von Doppelbildern infolge des gegebenenfalls entlang der Kante 3 eingebrachten Klebstoffes kann so sicher durch eine randscharfe Kante 3 ausgeschlossen werden.

Erfindungsgemäße optische Baugruppen sind für eine breite Anwendung vorteilhaft in Messsystemen, Materialbearbeitungsanlagen, die mit optischen Strahlen arbeiten, und in optisch abbildenden Systemen, wie Ferngläsern, Projektionsgeräten und Kameras, einsetzbar. Sie bieten eine kompakte, vergleichsweise kostengünstige Alternative zu einer Vielzahl herkömmlicher optischer Bauelemente oder Baugruppen.

### Bezugszeichenliste

- 0: Spiegelteilpaar
- 1: erstes Spiegelteil
- 1.1: Spiegelfläche des ersten Spiegelteils 1
- 1.2: Rückfläche des ersten Spiegelteils 1
- 1.3: Fügefläche
- 2: zweites Spiegelteil
- 2.1: Spiegelfläche des zweiten Spiegelteils 2
- 2.2: Rückfläche des zweiten Spiegelteils 2
- 3: Kante
- 4: Spaltkörper
- 5: Wirkungslinie
- 6: Justierspalt
- 7: Klebstoff

- α: erster Winkel
- β: zweiter Winkel
- γ: dritter Winkel
- l: Länge
- t: Tiefe

## Patentansprüche

1. Optische Baugruppe zur Richtungsänderung von Lichtstrahlen mit mindestens zwei Spiegelteilen (1, 2), wobei die Spiegelteile (1, 2) jeweils durch einen Glaskörper mit einer Spiegelfläche (1.1, 2.1), einer hierzu parallelen Rückfläche (1.2, 2.2) und mindestens drei Seitenflächen gebildet und so zueinander angeordnet sind, dass jeweils die Spiegelflächen (1.1, 2.1) von zwei der Spiegelteile (1, 2), die ein Spiegelteilpaar (0) bilden, einen vorgegebenen ersten Winkel (α) miteinander einschließend und eine Kante (3) mit einer Länge (I) bildend, aneinandergrenzen und in dem Spiegelteilpaar (0) ein Justierspalt (6) vorhanden ist, in dem ein Spaltkörper (4) entlang einer durch den Spaltkörper (4) in einer Spaltrichtung verlaufenden Wirkungslinie (5) bis in eine Tiefe (t) in den Justierspalt (6) ragend eingeführt ist, wobei die Tiefe (t) für den ersten Winkel (α) mitbestimmend ist,
**dadurch gekennzeichnet,**
**dass** die Wirkungslinie (5) die Kante (3) schneidet.

2. Optische Baugruppe nach Anspruch 1, **dadurch gekennzeichnet,**
**dass** eine der Seitenflächen des ersten der ein Spiegelteilpaar (0) bildenden Spiegelteile (1) eine Fügefläche (1.3) darstellt und die Fügefläche (1.3) und die Spiegelfläche (1.1) des ersten Spiegelteils (1) einen zweiten Winkel (β) miteinander einschließen, der kleiner 180° minus dem ersten Winkel (α) ist, und die Fügefläche (1.3) und die Spiegelfläche (2.1) des zweiten der Spiegelteile (2), einen dritten Winkel (γ) miteinander einschließend, den Justierspalt (6) bilden, der mit Klebstoff (7) verfüllt ist und in dem der Spaltkörper (4) an der Fügefläche (1.3) und der Spiegelfläche (2.1) des zweiten Spiegelteils (2) anliegend stoffschlüssig sitzt.

3. Optische Baugruppe nach Anspruch 1, **dadurch gekennzeichnet,**
**dass** eine der Seitenflächen des ersten der ein Spiegelteilpaar (0) bildenden Spiegelteile (1) eine Fügefläche (1.3) darstellt und die Fügefläche (1.3) und die Spiegelfläche (1.1) des ersten Spiegelteils (1) einen zweiten Winkel (β) miteinander einschließen, der kleiner 180° minus dem ersten Winkel (α) ist, und die Fügefläche (1.3) und die Spiegelfläche (2.1) des zweiten der Spiegelteile (2) stoffschlüssig miteinander verbunden sind und in dem zweiten Spiegelteil (2) der Justierspalt (6) mit einem rechteck-, trapez- oder v-förmigen Querschnitt über die Länge (I) vorhanden ist, in dem der Spaltkörper (4) kraftschlüssig sitzt.

4. Optische Baugruppe nach Anspruch 2 oder 3, **dadurch gekennzeichnet,**
**dass** der Spaltkörper (4) ein Keil oder ein Zylinderstab ist.

5. Optische Baugruppe nach Anspruch 4, **dadurch gekennzeichnet,**
**dass** sich der Keil oder der Zylinderstab wenigstens über die Hälfte der Länge (I) erstreckt.

6. Optische Baugruppe nach Anspruch 2 oder 3, **dadurch gekennzeichnet,**
**dass** die Wirkungslinie (5) eine Winkelhalbierende des ersten Winkels (α) darstellt.

7. Optische Baugruppe nach Anspruch 6, **dadurch gekennzeichnet,**
**dass** die Rückfläche (2.2) des zweiten Spiegelteils (2) eine zur Wirkungslinie (5) orthogonal verlaufende Fase aufweist.

8. Optische Baugruppe nach Anspruch 1, **dadurch gekennzeichnet,**
**dass** die Rückfläche (1.2) des ersten Spiegelteils (1) und / oder die Rückfläche (2.2) des zweiten Spiegelteils (2) verspiegelt oder teilverspiegelt ist oder mit anderen funktionalen Beschichtungen versehen ist.

9. Optische Baugruppe nach Anspruch 1, **dadurch gekennzeichnet,**
**dass** die Rückfläche (1.2) des ersten Spiegelteils (1) und / oder die Rückfläche (2.2) des zweiten Spiegelteils (2) eine gekrümmte Oberflächenform aufweist.

10. Optische Baugruppe nach Anspruch 3, **dadurch gekennzeichnet,**
**dass** die Fügefläche (1.3) und die Spiegelfläche (2.1) des zweiten Spiegelteils (2) miteinander diffusionsverschweißt sind.

11. Optische Baugruppe nach Anspruch 3, **dadurch gekennzeichnet,**
**dass** der Spaltkörper (4) aus zwei Segmenten besteht, die jeweils an einem der beiden Enden des Justierspaltes (6) eingebracht sind.

12. Optische Baugruppe nach Anspruch 3, **dadurch gekennzeichnet,**
**dass** der Spaltkörper (4) aus mindestens drei Segmenten besteht, die über den Justierspalt (6) verteilt eingebracht sind, und wenigstens zwei der Segmente unterschiedlich tief sitzen.

## Claims

1. An optical assembly for changing the direction of light beams with at least two mirror sections (1, 2), wherein the mirror sections (1, 2) are each formed by a glass body having a mirror surface (1.1, 2.1), a rear surface (1.2, 2.2) parallel thereto and at least three lateral surfaces and are arranged relative to each other in such a way that in each case the mirror surfaces (1.1, 2.1) of two of the mirror sections (1, 2), which form a pair of mirror sections (0), adjoin each other, enclosing a predetermined first angle (α) with each other and forming an edge (3) with a length (I), and an adjustment gap (6) is present in the pair of mirror sections (0), in which a gap body (4) is inserted along a line of action (5) extending through the gap body (4) in a gap direction, protruding into the adjustment gap (6) to a depth (t), the depth (t) being co-determining for the first angle (α), **characterized in that**
the line of action (5) intersects the edge (3).

2. The optical assembly according to claim 1, **characterized in that**
one of the lateral surfaces of the first of the mirror sections (1) forming a pair of mirror sections (0) constitutes a joining surface (1.3), and the joining surface (1.3) and the mirror surface (1.1) of the first mirror section (1) enclose a second angle (β) with each other which is smaller than 180° minus the first angle (α), and the joining surface (1.3) and the mirror surface (2.1) of the second of the mirror sections (2), enclosing a third angle (γ) with each other, form the adjustment gap (6) which is filled with adhesive (7) and in which the gap body (4) is seated in a material-locking manner against the joining surface (1.3) and the mirror surface (2.1) of the second mirror section (2).

3. The optical assembly according to claim 1, **characterized in that**
one of the lateral surfaces of the first of the mirror sections (1) forming a pair of mirror sections (0) constitutes a joining surface (1.3) and the joining surface (1.3) and the mirror surface (1.1) of the first mirror section (1) enclose a second angle (β) with each other, which is less than 180° minus the first angle (α), and the joining surface (1.3) and the mirror surface (2.1) of the second of the mirror sections (2) are connected to each other in a material-locking manner, and in the second mirror section (2) the adjustment gap (6) is present with a rectangular, trapezoidal or v-shaped cross-section over the length (I), in which the gap body (4) is seated in a force-locking manner.

4. The optical assembly according to claim 2 or 3, **characterized in that** the gap body (4) is a wedge or a cylindrical rod.

5. The optical assembly according to claim 4, **characterized in that**
the wedge or the cylindrical rod extends over at least half of the length (l).

6. The optical assembly according to claim 2 or 3, **characterized in that** the line of action (5) represents a bisector of the first angle (α).

7. The optical assembly according to claim 6, **characterized in that**
the rear surface (2.2) of the second mirror section (2) has a chamfer running orthogonally to the line of action (5).

8. The optical assembly according to claim 1, **characterized in that**
the rear surface (1.2) of the first mirror section (1) and/or the rear surface (2.2) of the second mirror section (2) is mirror-coated or partially mirror-coated or is provided with other functional coatings.

9. The optical assembly according to claim 1, **characterized in that**
the rear surface (1.2) of the first mirror section (1) and/or the rear surface (2.2) of the second mirror section (2) has a curved surface shape.

10. The optical assembly according to claim 3, **characterized in that**
the joining surface (1.3) and the mirror surface (2.1) of the second mirror section (2) are diffusion-bonded with each other.

11. The optical assembly according to claim 3, **characterized in that**
the gap body (4) consists of two segments, each of which is inserted at one of the two ends of the adjustment gap (6).

12. The optical assembly according to claim 3, **characterized in that**
the gap body (4) consists of at least three segments which are distributed over the adjustment gap (6), and at least two of the segments are located at different depths.

## Revendications

1. Module optique permettant de changer l'orientation des faisceaux lumineux pourvu d'au moins deux parties miroir (1, 2), les parties miroir (1, 2) étant formées respectivement par un corps en verre avec une surface de miroir (1.1, 2.1), une surface arrière (1.2, 2.2) parallèle à celle-ci et au moins trois surfaces latérales et étant disposées l'une par rapport à l'autre de telle sorte que respectivement les surfaces de miroir (1.1, 2.1) de deux des parties miroir (1, 2), qui forment une paire de parties miroir (0), sont adjacentes l'une à l'autre en formant entre elles un premier angle (α) prédéfini et en formant une arête (3) d'une longueur (l), et une fente d'ajustage (6) est présente dans la paire de parties miroir (0), dans laquelle un corps de fente (4) est introduit le long d'une ligne d'action (5) s'étendant à travers le corps de fente (4) dans une direction de fente jusqu'à une profondeur (t) en saillie dans la fente d'ajustage (6), la profondeur (t) étant co-déterminante pour le premier angle (α), **caractérisé en ce que**
la ligne d'action (5) coupe l'arête (3).

2. Module optique selon la revendication 1, **caractérisé en ce que**
l'une des surfaces latérales de la première des parties miroir (1) formant une paire de parties miroir (0) représente une surface d'assemblage (1.3) et la surface d'assemblage (1.3) et la surface de miroir (1.1) de la première partie miroir (1) forment entre elles un deuxième angle (β) qui est inférieur à 180° moins le premier angle (α), et la surface d'assemblage (1.3) et la surface de miroir (2.1) de la deuxième des parties miroir (2), en formant entre elles un troisième angle (γ), forment la fente d'ajustage (6) qui est remplie de colle (7) et dans laquelle le corps de fente (4) est en contact avec la surface d'assemblage (1.3) et la surface de miroir (2.1) de la deuxième partie miroir (2) par une liaison de matière.

3. Module optique selon la revendication 1, **caractérisé en ce que**
l'une des surfaces latérales de la première des parties miroir (1) formant une paire de parties miroir (0) représente une surface d'assemblage (1.3) et la surface d'assemblage (1.3) et la surface de miroir (1.1) de la première partie miroir (1) forment entre elles un deuxième angle (β) qui est inférieur à 180° moins le premier angle (α), et la surface d'assemblage (1.3) et la surface de miroir (2.1) de la deuxième des parties miroir (2) sont reliées l'une à l'autre par une liaison de matière, et dans la deuxième partie miroir (2) est présente la fente d'ajustage (6) avec une section transversale rectangulaire, trapézoïdale ou en forme de v sur la longueur (l), dans laquelle le corps de fente (4) est placé par une liaison de force.

4. Module optique selon la revendication 2 ou 3, **caractérisé en ce que** le corps de fente (4) est un coin ou une barre cylindrique.

5. Module optique selon la revendication 4, **caractérisé en ce que**
le coin ou la barre cylindrique s'étend au moins sur la moitié de la longueur (l).

6. Module optique selon la revendication 2 ou 3, **caractérisé en ce que** la ligne d'action (5) représente une bissectrice du premier angle (α).

7. Module optique selon la revendication 6, **caractérisé en ce que**
la surface arrière (2.2) de la deuxième partie miroir (2) présente un chanfrein s'étendant orthogonalement à la ligne d'action (5).

8. Module optique selon la revendication 1, **caractérisé en ce que**
la surface arrière (1.2) de la première partie miroir (1) et/ou la surface arrière (2.2) de la deuxième partie miroir (2) est réfléchissante ou partiellement réfléchissante ou est pourvue d'autres revêtements fonctionnels.

9. Module optique selon la revendication 1, **caractérisé en ce que**
la surface arrière (1.2) de la première partie miroir (1) et/ou la surface arrière (2.2) de la deuxième partie miroir (2) présente une forme de surface incurvée.

10. Module optique selon la revendication 3, **caractérisé en ce que**
la surface d'assemblage (1.3) et la surface de miroir (2.1) de la deuxième partie miroir (2) sont soudées par diffusion l'une à l'autre.

11. Module optique selon la revendication 3, **caractérisé en ce que**
le corps de fente (4) est constitué de deux segments qui sont respectivement introduits à l'une des deux extrémités de la fente d'ajustage (6).

12. Module optique selon la revendication 3, **caractérisé en ce que**
le corps de fente (4) est constitué d'au moins trois segments qui sont introduits en étant répartis sur la fente d'ajustage (6), et au moins deux des segments sont placés à des profondeurs différentes.
